Europäisches Patentamt

European Patent Office

Office européen des brevets

(11) Publication number: **0 612 017 A1**

# EUROPEAN PATENT APPLICATION

(21) Application number: **93102439.2**

(22) Date of filing: **17.02.93**

(51) Int. Cl.5: **G06F 15/20**

(43) Date of publication of application:
**24.08.94 Bulletin 94/34**

(84) Designated Contracting States:
**DE FR GB**

(71) Applicant: **INTERNATIONAL BUSINESS MACHINES CORPORATION**
**Old Orchard Road**
**Armonk, N.Y. 10504 (US)**

(72) Inventor: **Färber, Franz**
**Beethovenstrasse 34**
**W-7030 Böblingen (DE)**

(74) Representative: **Mönig, Anton, Dipl.-Ing.**
**IBM Deutschland Informationssysteme GmbH,**
**Patentwesen und Urheberrecht**
**D-70548 Stuttgart (DE)**

(54) A method and a computer system for storing terms in a data base.

(57) The invention concerns a method and a computer system for storing terms in a data base, such as a thesaurus. The invention particularly provides an index (10, 12) for a terminological data structure (14). One example for a terminological data structure is a thesaurus. A thesaurus is a controlled vocabulary of semantically related terms which usually cover a specific application domain. The invention particularly provides a device for terminological control and especially supports translating the natural language used in documents into a formalized, semantically precise language.

FIG. 1

The invention concerns a method for storing terms in a data base, such as in an information retrieval system or in a knowledge base, a method of partial match retrieval of a term in a data base and a computer system for storage of terms in a data base, such as a thesaurus.

From IBM Technical Disclosure Bulletin, September 1992, page 81-82, algorithms for disambiguating word senses in thesauri are known. The data base implementing a dictionary-style thesaurus according to this document consists of alphabetically arranged discrete entries. Each entry consists of a head word, separated into senses, and each sense is followed by a list of its synonyms. The synonyms that appear in the list are not indexed for their intended sense. Two algorithms are devised to automatically index synonyms for their intended senses. However, the index structure disclosed in this document is not appropriate for large data bases.

From US-A-4 923 314 a thesaurus for electronic typewriter with spelling dictionary which identifies words from a dictionary memory using a special code is known. The thesaurus is used for finding synonyms of words in electronic typewriters which have electronic dictionaries for storing words in a data base contained in an electronic memory. Each word in the electronic dictionary which appears in the thesaurus is identified by a special code immediately following the word, so that the dictionary can be scanned quickly to determine if a given input word is in the thesaurus. If the word is in the thesaurus the search for synonyms can proceed. Again, this index structure is not satisfying in terms of search time and storage space needed - especially for a large data base.

Further, the state of the art is insufficient with respect to partial match retrieval. Partial match retrieval is hardly possible with known indexing techniques and takes a very long time.

Therefore it is an object of the invention to provide an improved method for storing terms in a data base, a method of searching a term in a data base, a method of partial match retrieval and a computer system for storage of terms in a data base, such as a thesaurus.

The object of the invention is solved by the features laid down in the independent claims. Preferred embodiments of the invention are laid down in the dependent claims.

The invention particularly provides an index for a terminological data structure. One example for a terminological data structure is a thesaurus. A thesaurus is a controlled vocabulary of semantically related terms which usually cover a specific application domain. It is a device for terminological control and especially supports translating the natural language used in documents into a formalized, semantically precise language.

From the part of the user the following information comprised in a thesaurus is particularly relevant:

a) The types of relations contained in the thesaurus,

b) the environment of a term or with other words the terms to which a given term is related via one or more predefined relations,

c) the search of a given term in the thesaurus,

d) terms comprised in the thesaurus which fulfil given specifications or with other words partial match retrieval,

e) the number and the type of relations which originate from a specific term.

The inventive index structure allows to retrieve these information quickly without necessarily keeping all the relevant data constantly in the main memory of the computer system.

According to the inventive method for storing terms T in a data base, such as a thesaurus, first an ordered sequence S of said terms T is established, where

$$S = \{T_1, T_2, ..., T_n\}.$$

Second, clusters $s_{ij}$ of said sequence S are defined, where

$$s_{ij} = \{T_i, T_{i+1} ..., T_j\}.$$

The clusters $s_{ij}$ are sub-sequences of the sequence S.

Third, a key $k_{ij}$ is assigned to each of the clusters $s_{ij}$, where the key $k_{ij}$ is given by a function f

$$f: k_{ij} = f(s_{ij})$$

which yields the same key $k_{ij}$ for each of the terms T which are comprised in the cluster $s_{ij}$.

According to a preferred embodiment of the invention, the inventive method further comprises a step of assigning a table of relations R to at least some of the terms T, where

$R_i = \{r_{i1}, r_{i2}, ..., r_{im}\}$.

The relation $r_{i1}$ to $r_{im}$ are comprised in the table of relations $R_i$ which is assigned to the term $T_i$. At least some of the relations r comprised in the table of relations $R_i$ define a relationship between the term $T_i$ and another one of the terms T comprised in the sequence S. Thereby preferably a thesaurus is implemented.

Furthermore it is advantageous to assign a key K to each of the terms T. Depending on the specific application a choice of the key K to be the offset of an address of the term T is appropriate. The keys K preferably are stored separately from the terms T, so that it is possible to carry out a binary search directly on the keys K in order to speed up storage access to the terms T.

The same principles are incorporated in the inventive method of partial match retrieval of a term T in a data base, such as an information retrieval system, a knowledge base or a thesaurus. Thereby a partial match retrieval is greatly sped up vis-à-vis the prior art.

The teaching of the invention is advantageously employed in a multiplicity of environments. One example is in information retrieval systems where usually a large number of documents is stored. The occurrence of key words in these documents is stored in a concordance list. If a term T is considered a key word, it is retrieved from the documents stored in the data base of the retrieval system via the concordance list. However it is not possible to access the environment of the search argument, which in this case is the term T. This problem is helped by the invention, if it is employed in such a retrieval system.

Each search for a term T in the data base of the retrieval system provides the option for an automatic search of synonyms or other interrelated terms, which constitute the environment of the search argument. This enhances the usability and reliability of the search result, since the search is not necessarily restricted to the specific term T which was chosen as a search argument by the user.

Another field of technology in which the invention is advantageously employed is machine assisted translation. In a system of performing automatic translation from natural language into another natural language based on dependence relation among concepts a thesaurus representing the implication among concepts is used e.g. according to US-A-4 916 614.

Other possible applications of thesauri - especially in knowledge based systems - are described in "Thesaurus und wissensbasierte Systeme - Thesauri und Wissensbasen", Jiri Panyr, Nachr. Dok. 39, 209-215 (1988), VCH Verlagsgesellschaft mbH, Weinheim.

A thesaurus is not necessarily restricted to textual information but any kind of information - especially symbolic information - be stored therein. In particular it is therefore possible e.g. to provide thesauri comprising chemical or mathematical formula or the like in a specific speciality field of science or technology.

In the following preferred embodiments are described with reference to the drawing in which

Fig. 1     is a schematic diagram illustrating the index structure for storage of the terms T according to the invention;

Fig. 2     is a schematic diagram illustrating the index structure according to the invention for the storage of the relations between terms.

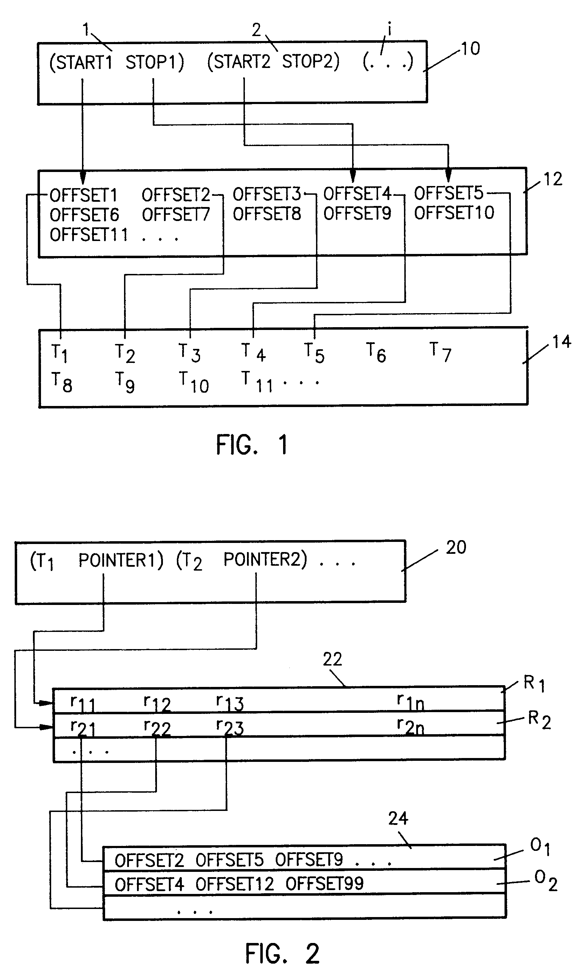

With reference to Fig. 1 the inventive method for storing terms T and the corresponding index structure is explained in more detail by way of example in the following. A first block of data 14 contains an ordered sequence S of terms T, where

$S = \{T_1, T_2, ..., T_n\}$.

The terms T are sorted according to a predefined sorting criterion. For simplicity the terms T considered here are assumed to be of an alpha-numerical type, so that an appropriate sorting criterion is the alphabetic order and/or the numerical order. This step of sorting is accomplished according to sorting algorithms which are known as such.

The terms T which are comprised in the first block of data 14 are elements of clusters $s_{ij}$ of the sequence S, where

$s_{ij} = \{T_i, T_{i+1}, ..., T_j\}$.

The terms $T_1$, $T_2$, $T_3$ and $T_4$ comprised in the first block of data 14 are elements of the cluster $s_{1,4}$. The assignment to clusters $s_{ij}$ of the other terms $T_5$ to $T_{11}$ which are also comprised in the first block of data 14 is not shown in the drawing.

A key $k_{ij}$ is assigned to teach of the clusters $s_{ij}$. In this example the keys $k_{ij}$ are stored in the second block of data 10, which comprises the keys start 1 and start 2. Each key $k_{ij}$ is given by a function f

f: $k_{ij} = f(s_{ij})$.

The function f yields the same key for each of the terms T comprised in a specific cluster. Thus in the example considered here the following equation applies:

$$k_{14} = \text{start 1} = f(T_1) = f(T_2) = f(T_3) = f(T_4) = f(s_{ij}).$$

If the characters constituting the terms T are coded in ASCII code, the following is an appropriate choice for a function f:

$$k_{ij} = \text{ASCII}(C_1(T \in s_{ij}))^*F + \text{ASCII}(C_2(T \in s_{ij})),$$

where ASCII(A) yields the ASCII code of the argument A, $C_2(T \in s_{ij})$ is the first character of a term T which is comprised in a specific cluster $s_{ij}$, $C_2(T \in s_{ij})$ is the second character of a term T which is comprised in the same cluster $s_{ij}$ and F is an appropriate factor, such as 256. However, any other choice of a function f serving the same purpose is possible, especially if not the ASCII code, but any other type of code is used.

The key $k_{ij}$ of a cluster $s_{ij}$ allows to access the sub-sequence of terms $\{T_i, T_{i+1}, ..., T_j\}$. In the example considered here the key $k_{ij}$ is the offset or with other words to storage address of its corresponding sub-sequence of terms.

The key $k_{ij}$ has additional information assigned thereto. This is symbolized by a pointer in Fig. 1 pointing from the key $k_{1,4}$ = start 1 to the address offset 1 of the term $T_1$. The key $k_{ij}$ may either equal the offset of the first term $T_i$ stored in that sequence or allows to access this offset via a pointer. The key $k_{ij}$ is the address assigned to the whole cluster $s_{ij}$ whereas the offset i is the address of term $T_i$.

The data stop 1 either equals or points to the offset of the last term $T_4$ which is comprised in this sequence $s_{1,4}$. Thus the first entry 1 into the second block of data 10 comprises the information start 1 and stop 1, which point to the first and the last term comprised in that sequence, respectively. The same applies analogously for all clusters $s_{ij}$ of the sequence S.

Consequently, in more general terms a key $k_{ij}$ which is part of an entry in the second block of data 10 is a key to the first term $T_i$ in the corresponding cluster, whereas the additional data (stop 1, stop 2) is a key to the last term $T_j$ of that sequence. In the case considered here the key $k_{ij}$ and its associated stop key (stop 1, stop 2) do not point directly do the corresponding terms, but to the offsets of the corresponding terms. This is possible, because the terms are sorted and stored in an ordered sequence - in this case alphabetically. Consequently the corresponding offsets of these terms do have the same order as their corresponding terms T, the address increasing e.g. from offset 1 to offset 4.

The offsets offset 1 to offset 11 are stored in the third block of data 12 which is shown in Fig. 1, whereby the offset 5 to which the key $k_{5x}$ = start 2 points is the offset of the first term $T_5$ of the cluster $s_{5,x}$. The key $k_{5x}$ together with the associated information stop 2 form part of the second entry 2.

If a term $T_s$ consisting of a sequence of characters $C_i$

$(C_1, C_2, ..., C_p)$

is to be retrieved in the data base considered here, the following procedure applies:

1. The key $k_{ij}$ of the cluster $s_{ij}$ which comprises the term T is obtained by evaluation of the function f. If the function f

$$k_{14} = \text{start 1} = f(T_1) = f(T_2) = f(T_3) = f(T_4) = f(s_{ij})$$

which was already considered above, is used, only the first two characters of the term T serve to identify the corresponding key and thereby the corresponding cluster. Other functions f using more than two of the first characters of a term T are also possible, but this results in a larger number of different clusters s. A trade-off between the resulting number of clusters on the one side and the needs of the specific application environment - especially with regard to the hardware used - on the other side is established by an appropriate choice of the function f.

2. Accessing the cluster $s_{ij}$ by the key $k_{ij}$ which is found in step 1. In the example considered here the key $k_{ij}$ has a pointer to the offset of the first term $T_i$ of the cluster $s_{ij}$, whereas the associated stop key stop has a pointer to the last term $T_j$ of said cluster.

3. Searching the term T within the cluster $s_{ij}$. This search is sped up if the first block of data 14 and the third block of data 12 are stored separately as it is the case in the example shown in Fig. 1. Thereby it is possible to apply a binary search strategy.

4

Different kinds of binary search techniques are known from the prior art. Especially D.E. Knuth, "The Art of Computer Programming", volume 3, Sorting and Searching, Addison-Wesley Publishing Company, 1973 describes a multiplicity of binary search algorithms, especially in chapter 6.2, page 406.

According to a preferred embodiment of the invention the entries i in the second block of data 10 comprise further additional information to identify the middle of the sequence of the cluster $s_{ij}$. The term $T_M$ is placed in the middle of the sequence of the cluster $s_{ij}$:

$$\{T_i, T_{i+1}, ..., T_M, ..., T_j\},$$

where M is an index identifying the middle of the sequence, such as the arithmetic mean of M(i,j) of i and j.

If a function f is employed which uses the first characters $C_1, C_2, ..., C_x$ of the terms T, the character $C_{x+1}$ of the middle term $T_M$ is stored in the second block of data 10 together with the corresponding key $k_{ij}$ in the entry i. Consequently the key $k_{ij}$ together with its associated information - which is the corresponding stop key and the character $C_{x+1}$ of the term $T_M$ and a pointer to the offset M of the term $T_M$, such as its index M, - form a complete entry i into the second block of data 10. Thereby the binary search is sped up by about 50 %.

For simplicity only the case x = 2 is considered in the following, without restriction of generality.

Having obtained the key $k_{ij}$ of the cluster $s_{ij}$ comprising the term T which is to be retrieved the second block of data is accessed via that key $k_{ij}$ yielding the additional information of the character $C_3$, which is the third character of the middle term $T_m$. The character $C_3$ of the term $T_M$ is compared to the third character $C_3$ of the term T which is to be retrieved. If the character $C_3$ of the term T which is to be retrieved has a lower order according to the sorting criteria, only the lower half $\{T_i, T_{i+1}, ..., T_M\}$ of the cluster $s_i$ is searched, whereas in the opposite case the other half of the cluster $s_{ij}$ which is $\{T_{M+1}, ..., T_j\}$ is searched for the term T. The search is carried out by reading the offset of the term which is in the middle of the part of the cluster which is searched. The corresponding term is read from the first block of data 14, since its offset address is known. This term is compared to the term T which is to be retrieved and the binary search continues correspondingly. If the third characters are equal, the new criterion is the fourth character, and if the fourth character should also match, the fifth character and so on, until the term T is found.

In a more general case the preferred embodiment of the inventive method of searching a term considered here comprises the following steps:

1. Input of the term $T_s$ which is to be retrieved;

2. calculation of the key $k_{ij}$, which is obtained from the function f:

$$k_{ij} = f(T_s);$$

3. accessing the entry i in the second block of data which comprises the key $k_{ij}$ which is found in step 2;

4. comparison of

$$C_{x+1} (T_s) \text{ and } C_{x+1} (T_M),$$

where $C_{x+1} (T_s)$ is the (x + 1)th character of the input term $T_s$ and $C_{x+1} (T_M)$ is the (x + 1)th character of the middle term $T_M$ which is stored in the entry i. The number M is the index of the term $T_M$ stored in the middle of the cluster $s_{ij}$, which comprises the input term $T_s$.

Further the variable "lower boundary" is initialized to equal the index i of the first term $T_i$ comprised in the cluster $s_{ij}$ and the variable "upper boundary" is initialized to equal the index j of the last term $T_j$ of the same cluster considered here. This is done by the information contained in start i and stop i of the entry i.

4.1 If $C_{x+1} (T_s)$ equals $C_{x+1} (T_M)$, then

4.1.1 decide whether x + 1 equals the index p of the last character of the term $T_s$. If this is true all characters have already been compared and the term $T_s$ is found to be the term $T_M$ having its offset M. The offset M of the term $T_s$ is stored in the thirst block of data 12. The offset of the term $T_M$ is found easily, since it is the Mth offset in the sequence of offsets from offset i to offset j belonging to the terms $T_i$ to $T_j$ of the cluster $s_{ij}$ considered here.

If this is not true the variable x is incremented by one, so that the following character in the terms are compared in the following in step 5.

5. Decide whether $C_{x+1}(T_s)$ equals $C_{x+1} (T_M)$.

5.1 If the comparison in step 5 yields the result "true", then

5.1.1 decide whether all characters have already been compared - or with other words x + 1 equals p, so that the search argument $T_s$ and the term $T_M$ match. In this case the offset M of the term $T_s$

is identified and the procedure stops.

5.2 If the comparison of step 5 yields the result "untrue" then

5.2.1 decide whether

$$C_{x+1}(T_s) > C_{x+1}(T_M)$$

is true.

5.2.1.1 If this is the case then assign a new value to the index M, which is the middle of a sub-sequence contained within the cluster $s_{ij}$. The new value of the index M is defined by the middle of the sub-sequence between the former index M and the "upper boundary", such as the arithmetic mean of the former value of M and "upper boundary". The variable "upper boundary" remains the same, whereas the variable "lower boundary" is set to be equal to the former index M.

5.2.1.2 If the result of the comparison in step 5.2.1 is "untrue" the new value for M is established as follows: The new value of the index M is defined by the middle of the sub-sequence between the "lower boundary" and the former index M. The variable "lower boundary" remains the same, whereas the variable "upper boundary" is set to be equal to the former index M. In the following only the sub-sequence as defined in step 5.2.1.1 or 5.2.1.2 is searched for the term $T_s$.

5.2.2 Go to step 5.

The above described method is particularly advantageous if the offsets i in the third block of data 12 and the terms $T_i$ in the first block of data 14 are stored separately. This allows to identify the storage address of a term $T_i$ only by its index i in the sequence s, since its offset has the same sequence index i in the sequence of offsets stored in the third block of data 12.

The method of partial match retrieval according to the invention incorporates the same principles as described above. The method for storing of terms T in a data base which allows partial match retrieval operations employs the same index structure as explained with reference to Fig. 1. In this case, however, the clusters $s_{ij}$ only comprise those terms T which have a certain set of symbols in common. The terms and their corresponding offsets are sorted as explained with reference to Fig. 1.

First, relevant sets of symbols have to be defined. If one has to deal with alphanumeric data, a good choice is to define sets of symbols comprising two characters. Each set of symbols like "a,a", "a,b", ..., "a,z", "b,a", "b,b", ..., "z, z", ... as its dedicated cluster $s_{ij}$. Each cluster $s_{ij}$ comprises only those terms T which have the set of symbols in common to which the cluster $s_{ij}$ is dedicated.

If all the terms T which have a certain character combination $(C_1, C_2)$ in common are searched in the data base, first the function f is evaluated. Again a choice of f to be

$$k_{ij} = \text{ASCII}(C_1(T \in s_{ij}))^*F + \text{ASCII}(C_2(T \in s_{ij}))$$

is appropriate. The key $k_{ij}$ allows to access the relevant cluster $s_{ij}$.

In the method of partial match retrieval, first a string of symbols

$$(C_i, C_{i+1}, ...C_j)$$

is defined. The search is aimed to retrieve all terms T which are stored in the data base and which comprise this string of symbols, such as a string of characters in the case of alphanumeric data.

In this string of symbols, substrings are identified, which are equal to the sets of symbols

$$(C_1, C_1), (C_1, C_2), (C_1, C_3), ..., (C_Q, C_Q).$$

Each of those sets of symbols has a dedicated cluster $s_{ij}$ assigned thereto as explained above. If a set of symbols is restricted to contain only two characters, the substrings

$$(C_i, C_{i+1}), (C_{i+1}), C_{i+2}), ..., (C_{j-1}, C_j)$$

are identified. Each of those substrings allows to access a cluster of terms T which comprise this character combination.

In the next step the intersection of all the clusters which are thereby identified is calculated. The result is a class of terms T, each of said terms T of this class comprising all the substrings

$$(Ci, C_{i+1}), (C_{i+1}, C_{i+2}), ..., (C_{j-1}, C_j).$$

However this set of terms T may still comprise certain unwanted terms which do not comprise the string of symbols

$$(C_i, C_{i+1} ... C_j),$$

which is the search argument in this order. Therefore an additional search is carried out on the set of terms T found by the above described procedure. This search yields the desired search result, that is only those

6

terms T comprising the string of characters ($C_i$, $C_{i+1}$, ... $C_j$) in this order.

This search preferably again is a binary search analogous to that considered above with respect to the inventive method of searching a term.

This method is particularly advantageous, since it dramatically speeds up the partial match retrieval of the term T. This is accomplished due to the grouping of all possible character combinations and storage of the terms T in dedicated clusters, so that the final search is carried out on a preselected group of terms T but not on all possible terms T contained in the data base.

With reference to Fig. 2 now the index structure for the storage of the relations between terms according to the invention is explained in the following. The block of data 20 shown in Fig. 2 corresponds to the first block of data 14 of Fig. 1. As it is shown in Fig. 2 the terms $T_1$, $T_2$, ... have the pointers pointer 1, pointer 2, ... assigned thereto. In the example shown in Fig. 2 a table of relations R is assigned to each term $T_i$ via its pointer i. A table of relations $R_i$ of a term $T_i$ is defined as follows:

$$R_i = \{r_{i1}, r_{i2}, ..., r_{im}\}.$$

The relations $r_i$ comprised in the table of relations $R_i$ define relationships between the term $T_i$ and another one of the terms T comprised in the sequence S. In a thesaurus e.g., for basic types of semantic relations between terms can be distinguished:

- hierarchical relations

  Take for example the narrower term relations (NT), the relation between an object and a part of it (NTP), or the relations between a class and an instance of it (INST).

| dog | NT | animals |
|-----|-----|---------|
| wheel | NTP | cars |
| Alps | INST | mountain regions |

- synonym relations

  A synonym relation connects two terms, which have the same or a similar meaning. In contrary to a synonym list, a thesaurus defines synonyms as words with exactly the same meaning. In a thesaurus, a class of synonyms always has a prominent member which is called the preferred term or simply the descriptor; all other terms in a synonym class, then, are non descriptors.

| advocats | SYN | lawyer |
|----------|-----|--------|
| Linguistic | SYN | Sprachwissenschaft |

- associative relations

  The third type of semantic relationship is more difficult to specify. Two terms can be called "associated" (code RT) if the things they denote "have to do with each other" but are not related in some obvious way. Examples:

| cells | RT | cytology |
|-------|-----|----------|
| family planning | RT | population control |

- other relations

  Many other relations between terms can be thought of, which often depend on the way a domain of knowledge is organized. E.g. in car manufacturing, an is-made-of relation between a product part and a material is a possible additional relation.

A table of relations R may comprise only a subset of all possible relations r, since the term $T_i$ to which the table of relations R belongs may have only a more restricted number of relations r to other terms T. Each relations r has a pointer assigned thereto which points to a table of offsets $O_i$. The table of offsets $O_i$ comprises all the offsets of the terms T which have relations $r_i$ to the term $T_i$. This allows to access these terms T via the offsets. In the example shown in Fig. 2 only the table of offsets $O_1$ and $O_2$ of the relations $r_{2,1}$ and $r_{2,2}$ of the table of relations $R_2$ is shown.

The table of relations R is loaded into the main memory of the computer system since it is not necessary to load the whole data structure into the main memory in order to carry out an effective search. If the tables of relations R are stored in the fourth block of data 22 in the main memory of the computer system, this allows a very fast access to the terms T which are in relationship with a specific term $T_i$. This is particularly valuable with respect to search times - especially if the inventive index structures as explained with reference to Fig. 1 are employed simultaneously.

**Claims**

1. A method for storing terms T in a data base, such as in an information retrieval system or in a knowledge base, said method comprising the steps of:

   a) establishing an ordered sequence S of said terms T, where

   $$S = \{T_1, T_2, ..., T_n\},$$

   b) defining clusters $s_{ij}$ of said sequence S, where

   $$s_{ij} = \{T_i, T_{i+1}, ..., T_j\}.$$

   c) assigning a key $k_{ij}$ to each of said clusters $s_{ij}$, where said key $k_{ij}$ is given by a function f, where

   $$f: k_{ij} = f(s_{ij}),$$

   said function f yielding the same key $k_{ij}$ for each of said terms T comprised in said cluster $s_{ij}$.

2. The method according to claim 1 further comprising a step of assigning a table of relations R to at least some of said terms T, where

   $$R_i = \{r_{i1}, r_{i2}, ..., r_{im}\}$$

   is the table of relations which is assigned to the term $T_i$,
   at least some said relations r comprised in said table of relations $R_i$ defining a relationship between said term $T_i$ and another one of said terms T comprised in said sequence S, so that preferably a thesaurus is implemented thereby.

3. The method according to claim 1 or 2 further comprising a step of assigning a key K to each of said terms T, said key K preferably being the offset of an address of the term T to which it is assigned.

4. The method according to any one of the preceding claims, wherein each of said terms T comprises a sequence of symbols $C_i$
   $$(C_1, C_2, ..., C_p),$$
   such as a sequence of characters, and each of said clusters $s_{ij}$ comprises only terms T having a sub-sequence of said symbols
   $$(C_1, C_1), (C_1, C_2), (C_1, C_3), ..., (C_Q, C_Q)$$
   in common, each of said sequences and said sub-sequences comprising at least one symbol.

5. The method according to any one of the preceding claims, wherein said key $k_{ij}$ of said cluster $s_{ij}$ is defined as follows:

   $$k_{ij} = \text{ASCII}(C_1(T \in s_{ij}))^*F + \text{ASCII}(C_2(T \in s_{ij})),$$

   where
   $$C_1(T \in s_{ij})$$
   is the first character of a term T which is comprised in said cluster $s_{ij}$,
   $$C_2(T \in s_{ij})$$
   is the second character of a term T which is comprised in said cluster $s_{ij}$, ASCII is a function yielding the ASCII-code of said characters and F is a factor, such as 256, so that said key $k_{ij}$ preferably is the offset of said cluster $s_{ij}$.

6. A method of searching a term T in a data base, such as a thesaurus of an information retrieval system or a knowledge base, said data base comprising clusters $s_{ij}$ of an ordered sequence S of said terms T, where

$S = \{T_1, T_2, ..., T_n\}$ and
$s_{ij} = \{T_i, T_{i+1}, ..., T_j\}$,

and keys $k_{ij}$ of each of said clusters $s_{ij}$, where each of said keys $k_{ij}$ is given by a function f, where

f: $k_{ij} = f(S_{ij})$,

said function f yielding the same key $k_{ij}$ for each of said terms T comprised in said cluster $s_{ij}$, comprising the steps of:
   a) obtaining the key $k_{ij}$ of the cluster $s_{ij}$ which comprises the term T by evaluation of the function f,
   b) accessing said cluster $s_{ij}$ via said key $k_{ij}$,
   c) searching said term T within said cluster $s_{ij}$, whereby said step of searching preferably is a step of binary searching.

7. A method for storing terms T in a data base, such as an information retrieval system or a knowledge base, each of said terms T comprising a sequence of symbols $C_i$
   $(C_1, C_2, ..., C_p)$,
such as a sequence of characters, said method comprising the steps of:
   a) defining sets of symbols
   $(C_1, C_1), (C_1, C_2), (C_1, C_3), ..., (C_Q, C_Q)$,
   b) establishing clusters $s_{ij}$, each cluster $s_{ij}$ comprising a sequence of terms T having a certain set of symbols in common,
   c) assigning a key $k_{ij}$ to each of said clusters $s_{ij}$, where said key $k_{ij}$ is given by a function f, where

   f: $k_{ij} = f(s_{ij})$,

   where said function f yields the same key $k_{ij}$ for each of said terms T comprised in said clusters $s_{ij}$.

8. A method of partial match retrieval of a term T in a data base, such as an information retrieval system or a knowledge base, said term comprising a sequence of symbols $C_i$
   $(C_1, C_2, ..., C_p)$,
such as a sequence of characters, said data base comprising clusters $s_{ij}$, each of said clusters $s_{ij}$ comprising a sequence of terms $T_i$ having a certain sequence of symbols
   $(c_1, C_1), (C_1, C_2), (C_1, C_3), ...$ or $(C_Q, C_Q)$
in common, a key $k_{ij}$ preferably being assigned to each of said clusters $s_{ij}$, said method comprising the steps of:
   a) defining a string of symbols
      $(C_i, C_{i+1}, ... C_j)$,
   such as a string of characters which is comprised in the term or the terms T to be retrieved,
   b) identifying substrings in said string of symbols
      $(C_i, C_{i+1}, ... C_j)$,
   each of said substrings corresponding to one of said sequences of symbols
   $(C_1, C_1), (C_1, C_2), (C_1, C_3), ...$ or $(C_Q, C_Q)$,
   whereby a first class of clusters $s_{ij}$ is defined,
   c) establishing the intersection of the terms T comprised in the first class of clusters $s_{ij}$, said intersection yielding a class of terms T,
   d) searching for terms T comprising said string of symbols
      $(C_i, C_{i+1}, ... C_j)$
   in said class of terms T, such as by a binary search.

9. A computer system for storage of a data base comprising terms T, such as a thesaurus, said computer system comprising
first storage means for storage of clusters $s_{ij}$ of an ordered sequence S of said terms T, where

9

$S = \{T_1, T_2, ..., T_n\}$ and
$s_{ij} = \{T_i, T_{i+1}, ..., T_j\}$,

second storage means for storage of keys $k_{ij}$ of each of said clusters $s_{ij}$, where each of said keys $k_{ij}$ is given by the function f, where

$f: k_{ij} = f(s_{ij})$,

said function f yielding the same key $k_{ij}$ for each of said terms T comprised in said cluster $s_{ij}$.

10. The computer system according to claim 9, further comprising third storage means for storage of tables of relations R, where each of said tables of relations R is assigned to a term T, where

$R_i = \{r_{i1}, r_{i2}, ..., r_{im}\}$,

at least some of said relations r comprised in said table of relations defining a relationship between the term $T_i$ to which the table of relations $R_i$ is assigned and another one of said terms T comprised in said sequence S.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 093 250 (I.B.M. CORPORATION) 9 November 1983 * claim 1 * | 1,6-9 | G06F15/20 |
| D,A | IBM TECHNICAL DISCLOSURE BULLETIN. vol. 35, no. 4B, September 1992, NEW YORK US pages 81 - 82 I.B.M. CORPORATION 'Algorithms for disambiguating word-senses in thesauri' * the whole document * | 1,6-9 | |
| A | IBM TECHNICAL DISCLOSURE BULLETIN. vol. 26, no. 11, April 1984, NEW YORK US page 6094 R. G. CALGREN ET AL. 'Indirect reference synonym data storage technique' * the whole document * | 1,6-9 | |
| | | | **TECHNICAL FIELDS SEARCHED (Int. Cl.5)** |
| | | | G06F |

The present search report has been drawn up for all claims

| Place of search | Date of completion of the search | Examiner |
|---|---|---|
| THE HAGUE | 07 JULY 1993 | KATERBAU R.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................
& : member of the same patent family, corresponding document

EPO FORM 1503 03.82 (P0401)